# EUROPEAN PATENT SPECIFICATION

(11) **EP 4 411 909 B1**
(45) Date of publication and mention of the grant of the patent: **01.07.2026**
(21) Application number: 23803748.5
(22) Date of filing: 02.05.2023
(51) Int. Cl.: H01M 10/04, H01M 10/0583

(54) **ELECTRODE ASSEMBLY, MANUFACTURING METHOD THEREOF AND BATTERY CELL INCLUDING SAME**
ELEKTRODENANORDNUNG, HERSTELLUNGSVERFAHREN DAFÜR UND BATTERIEZELLE DAMIT
ENSEMBLE ÉLECTRODE, SON PROCÉDÉ DE FABRICATION ET ÉLÉMENT DE BATTERIE LE COMPRENANT

(30) Priority: 10.05.2022 KR 20220057202; 26.04.2023 KR 20230054961
(43) Date of publication of application: 07.08.2024
(73) Proprietor: LG Energy Solution, Ltd., Seoul 07335 (KR)
(72) Inventor: LEE, Byeong Kyu, Daejeon 34122 (KR); JUNG, Su Taek, Daejeon 34122 (KR); CHUNG, Joo Young, Daejeon 34122 (KR); KIM, Jin Gon, Daejeon 34122 (KR); JUNG, Woo Jung, Daejeon 34122 (KR); KIM, Seung Il, Daejeon 34122 (KR)
(74) Representative: Goddar, Heinz J.
(86) International application number: PCT/KR2023/005987
(87) International publication number: WO 2023/219325

(56) References cited:
- JP-A- 2016 105 360
- KR-A- 20160 042 748
- KR-A- 20200 058 222
- KR-A- 20200 058 222
- KR-A- 20210 129 541
- KR-B1- 101 896 413
- US-A1- 2020 243 895

## Description

### [TECHNICAL FIELD]

### Cross Citation with Related Application(s)

This application claims the benefit of Korean Patent Application No. 10-2022-0057202 filed on May 10, 2022 and Korean Patent Application No. 10-2023-0054961 filed on April 26, 2023 in the Korean Intellectual Property Office.

The present disclosure relates to an electrode assembly, a manufacturing method thereof, and a battery cell including the same, and more particularly, to an electrode assembly in which electrodes and separator sheets are alternately stacked in a Z-folding type, a manufacturing method thereof and a battery cell including the same, which are an electrode assembly that can prevent the occurrence of overhang in which a positive electrode deviates from a negative electrode to disturb alignment, a manufacturing method thereof and a battery cell including the same.

### [BACKGROUND]

In general, there are various kinds of secondary batteries, such as a nickel cadmium battery, a nickel hydride battery, a lithium ion battery, and a lithium ion polymer battery. Such secondary batteries have been used in large-sized products that require high output, such as an electric vehicle and a hybrid electric vehicle, a power storage device for storing surplus power or new and renewable energy, and a backup power storage device, as well as small-sized products, such as a digital camera, a P-DVD, an MP3P, a mobile phone, a PDA, a portable game device, a power tool, and an E-bike.

In order to manufacture such a secondary battery, first, an electrode active material slurry is applied to a positive electrode current collector and a negative electrode current collector to manufacture a positive electrode and a negative electrode, which are stacked on both sides of a separator, thereby forming an electrode assembly having a predetermined shape. Then, the battery assembly is housed in a battery case, and an electrolyte solution is injected to seal the battery case.

The electrode assemblies are classified into various types. There may be mentioned a simple stack type in which the positive electrodes, separators and negative electrodes are simply alternatively stacked without manufacturing a unit cell, a lamination & stack type (L&S) in which unit cells are first manufactured using positive electrodes, separators, and negative electrodes, and then these unit cells are stacked, a stack & folding type (S&F) in which a plurality of unit cells are spaced apart and attached to one surface of a separator sheet that is long on one side, and the separator sheet is repeatedly folded in the same direction from one end, a Z-folding type in which a plurality of electrodes or unit cells are alternately attached to one surface and the other surface of a separator sheet that is long on one side, and processes of folding the separator sheet from one end in a specific direction and then folding it in the opposite direction are alternately repeated, and the like. Among them, the Z-folding type has a high degree of alignment and a high degree of electrolyte impregnation, and thus, has been frequently used in recent years.

Conventionally, however, when electrodes and separator sheets are stacked in such a Z-folding type, the portion of the separator sheet that wraps the electrode greatly exceeds the negative electrode and positive electrode, and the positive electrode is designed to have a smaller area than the negative electrode, whereby there is a high possibility of occurrence of overhang in which the positive electrode deviates from the negative electrode to disturb alignment. At this time, when the overhang phenomenon occurs, not only the performance of the electrode assembly and the battery cell including the electrode assembly may be degraded, but also the possibility of defects such as short circuits may be greatly increased.

Therefore, there is a need to develop an electrode assembly having a structure that can prevent the occurrence of overhang in which the positive electrode deviates from the negative electrode to disturb alignment, and a battery cell including the same.

D1: US 2020/243895 A1 (ZAMA KOICHI [JP] ET AL) 30 July 2020 (2020-07-30)

D1 relates to a secondary battery and, particularly, relates to a secondary battery where positive electrodes and negative electrodes are alternately stacked with a separator interposed therebetween. D1 includes a plurality of sheet-like positive electrodes, a plurality of sheet-like negative electrodes, and a separator placed between the positive electrodes and the negative electrodes, wherein the positive electrodes and the negative electrodes are alternately stacked with the separator interposed therebetween, the separator is a belt-like separator and continuously folded to be interposed between the positive electrodes and the negative electrodes, and folds of the continuously folded separator are at least a specified distance away from ends of the negative electrodes. It is possible to provide a secondary battery where the occurrence of adverse effects due to folds of a continuously folded separator is reduced.

### [DETAILED DESCRIPTION OF THE INVENTION]

### [Technical Problem]

It is an object of the present disclosure to provide an electrode assembly in which electrodes and separator sheets are alternately stacked in a Z-folding type, a manufacturing method thereof and a battery cell including the same, which are an electrode assembly that can prevent the occurrence of overhang in which a positive electrode deviates from a negative electrode to disturb alignment, a manufacturing method thereof and a battery cell including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided an electrode assembly in which electrodes and first separator sheets are alternately stacked, wherein: the electrode comprises a first electrode and a second electrode, the first separator sheet has a zigzag shape formed by being folded at least twice, a length of the second electrode is shorter than a length of the first electrode, and the electrode assembly comprises a molding member located between the first separator sheet wrapping the second electrode and the outer side surface of the electrode assembly and between the second electrode and an outer side surface of the electrode assembly.

The molding member is located between the first separator sheet wrapping the first electrode and the outer side surface of the electrode assembly and between the first electrode and the outer side surface of the electrode assembly.

An opposite side surface of the side surface wrapped by the first separator sheet among both side surfaces of the first electrode makes contact with the molding member, and an opposite side surface of a side surface wrapped by the first separator sheet both side surfaces of the second electrode makes contact with the molding member.

The molding member may entirely cover an opposite side surface of a side surface wrapped by the first separator sheet among both side surfaces of the first electrode.

An opposite side surface of the side surface wrapped by the first separator sheet among both side surfaces of the first electrode may make contact with the first separator sheet, and an opposite side surface of a side surface wrapped by the first separator sheet both side surfaces of the second electrode may make contact with the first separator sheet.

The electrode assembly according to the present embodiment comprises a first gap and a second gap, and the second gap may be larger than the first gap.

The molding member may fill the first gap and the second gap.

The molding member may be configured such that an area protruding from one side surface of the electrode assembly where the first gap is formed is larger than an area protruding from the other side surface of the electrode assembly where the second gap is formed.

The electrode assembly according to the present embodiment further comprises a second separator sheet, wherein the second separator sheet may wrap the entire outer surface of the electrode assembly and form the outer side surface of the electrode assembly.

According to another embodiment of the present disclosure, there is provided a manufacturing method of an electrode assembly, the method comprising the steps of: alternately stacking a first electrode, a second electrode and a first separator sheet to manufacture an electrode assembly; arranging a moldable material on the electrode assembly; and wrapping the outer surface of the electrode assembly with a second separator sheet, wherein the first separator sheet has a zigzag shape formed by being folded at least twice, and wherein the arranging a moldable material on the electrode assembly comprises arranging a moldable material between the first separator sheet wrapping the second electrode and the outer side surface of the electrode assembly and between the second electrode and the outer side surface of the electrode assembly.

The arranging a moldable material on the electrode assembly comprises arranging a moldable material between the first separator sheet wrapping the first electrode and the outer side surface of the electrode assembly and between the first electrode and the outer side surface of the electrode assembly.

The manufacturing method of an electrode assembly according to another embodiment of the present disclosure may further comprise heating and pressing the electrode assembly, after the arranging a moldable material on the electrode assembly.

An opposite side surface of the side surface wrapped by the first separator sheet among both side surfaces of the first electrode makes contact with the molding member, and an opposite side surface of a side surface wrapped by the first separator sheet both side surfaces of the second electrode makes contact with the molding member.

The electrode assembly comprises a first gap and a second gap, and the second gap may be larger than the first gap.

The molding member may fill the first gap and the second gap.

### [Advantageous Effects]

According to embodiments, the present disclosure is configured such that electrodes and separator sheets are alternately stacked in a Z-folding type, and includes a molding member that is located between the first separator sheet wrapping the second electrode and the outer side surface of the electrode assembly and between the second electrode and the outer side surface of the electrode assembly, thereby capable of preventing the occurrence of overhang in which a positive electrode deviates from a negative electrode to disturb alignment.

Also, the present disclosure is configured such that electrodes and separator sheets are alternately stacked in a Z-folding type, and includes a molding member that is located between the first separator sheet wrapping the first electrode and the outer side surface of the electrode assembly and between the first electrode and the outer side surface of the electrode assembly, thereby capable of preventing the occurrence of overhang in which a positive electrode deviates from a negative electrode to disturb alignment.

Additionally, the present disclosure can prevent the occurrence of overhang due to the inclusion of a molding member, prevent degradation of battery cell performance, minimize the possibility of defects such as short circuits, and improve performance and stability of an electrode assembly and a battery cell.

The effects of the present disclosure are not limited to the effects mentioned above and additional other effects not mentioned above will be clearly understood from the detailed description and the accompanying drawings by those skilled in the art.

### [BRIEF DESCRIPTION OF THE DRAWINGS]

FIG. 1 is a diagram showing a final electrode assembly according to an embodiment of the present disclosure;
FIG. 2 is a cross-sectional view of the electrode assembly taken along the cutting line A-A' of FIG. 1;
FIG. 3 is a diagram showing only some of the components of the electrode assembly of FIG. 2;
FIG. 4 is a diagram showing a state in which a molding member is formed in the electrode assembly of FIG. 3;
FIG. 5 is a diagram showing a state in which the outer side surface of the electrode assembly of FIG. 4 is formed;
FIG. 6 is a diagram showing a plane cut along the cutting line B-B' of FIG. 1 as viewed from above; and
FIGS. 7 to 9 are diagrams showing a manufacturing method of an electrode assembly according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described. However, a partial cross section of the electrode assembly is mainly described, but is not necessarily limited thereto, and other cross sections can also be described in the same or similar manner.

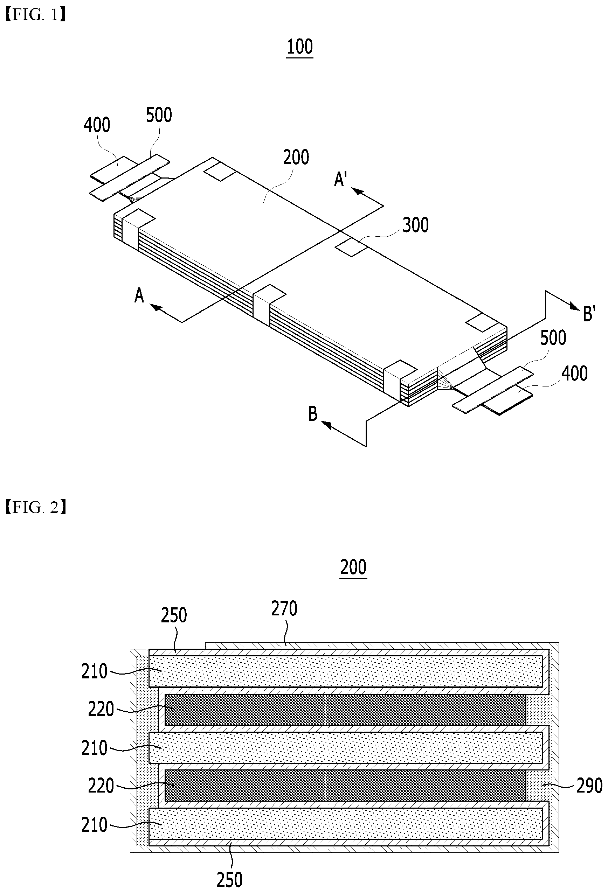

FIG. 1 is a diagram showing a final electrode assembly according to an embodiment of the present disclosure. FIG. 2 is a cross-sectional view of the electrode assembly taken along the cutting line A-A' of FIG. 1.

Referring to FIGS. 1 and 2, a final electrode assembly 100 according to the present disclosure may mean a structure in which a fixing tape 300 is attached to an outer surface of an electrode assembly 200. Thereby, the final electrode assembly 100 can maintain a stacked alignment state between a first electrode 210, a second electrode 220, and separator sheets 250 and 270 included in the electrode assembly 200. In particular, the fixing tape 300 can maintain the stacked alignment state between the electrodes 210 and 220 and the separator sheets 250 and 270. However, the present disclosure is not limited thereto, and the fixing tape 300 is omitted from the final electrode assembly 100, or is replaced with another member, thereby capable of maintaining the stacked alignment state between the first electrode 210, the second electrode 220 and the separator sheets 250 and 270.

Further, the final electrode assembly 100 may include an electrode lead 400 to which electrode tabs extending from a plurality of first electrodes 210 and a plurality of second electrodes 220 included in the electrode assembly 200 are joined. As an example, as shown in FIG. 1, the electrode leads 400 may extend to both ends of the electrode assembly 200, respectively, and the electrode lead 400 may be divided into a positive electrode lead or a negative electrode lead depending on polarities of the first electrode 210 and the second electrode 220. However, the position of the electrode lead 400 is not limited thereto, and unlike those shown FIG. 1, it may be extended together to one end of the electrode assembly 200.

Further, the final electrode assembly 100 may include a lead film 500 located in upper and lower parts of the electrode lead 400. Here, as the final electrode assembly 100 is mounted to a battery case (not shown), the lead film 500 can be sealed by a sealing part (not shown) along with outer peripheral sides of the battery case (not shown).

Referring to Figs. 1 and 2, the electrode assembly 200 according to one embodiment of the present disclosure may be an electrode assembly in which electrodes 210 and 220 and first separator sheets 250 are alternately stacked.

The electrodes 210 and 220 may include a first electrode 210 and a second electrode 220. Here, the first electrode 210 and the second electrode 220 may include electrode active materials having different polarities from each other. That is, the first electrode 210 and the second electrode 220 may be electrodes having different polarities from each other. As an example, if the first electrode 210 is a negative electrode, the second electrode 220 may be a positive electrode.

Further, the length of the second electrode 220 is smaller than the length of the first electrode 210. In other words, the length of the first electrode 210 may be larger than the length of the second electrode 220. That is, the first electrode 210 and the second electrode 220 have different lengths from each other, and thus, a length difference may exist between the first electrode 210 and the second electrode 220.

Further, the area of the second electrode 220 may be smaller than the area of the first electrode 210. In other words, the area of the first electrode 210 may be larger than the area of the second electrode 220. That is, the first electrode 210 and the second electrode 220 have different areas from each other, and thus, a size difference may exist between the first electrode 210 and the second electrode 220.

The separator sheet 250 has a zigzag shape formed by being folded at least twice. More specifically, as shown in FIG. 2, the separator sheet 250 may be folded in a direction of covering the first electrode 210 in a state in which the first electrode 210 is stacked. Also, it may be folded in a direction of covering the second electrode 220 in a state where the second electrode 220 is stacked on the first separator sheet 250 that covers the first electrode 210. After that, it may be folded in a direction of covering the first electrode 210 in a state in which the first electrode 210 is stacked on the first separator sheet 250 covering the second electrode 220. That is, the electrode assembly 200 can be formed by repeatedly performing stacking of the first electrode 210 or the second electrode 220 and folding of the first separator sheet 250.

Therefore, the first separator sheet 250 may be interposed between the upper surface of the first electrode 210 and the lower surface of the second electrode 220 and between the upper surface of the second electrode 220 and the lower surface of the first electrode 210.

In addition, as the separator is folded as described above, an opposite side surface of the side surface wrapped by the first separator sheet 250 among both side surfaces of the first electrode 210, and a side surface wrapped by the first separator sheet 250 among both side surfaces of the second electrode 220 may have a structure in which they are located so as to be adjacent to each other. At the same time, a side surface wrapped by the first separator sheet 250 among both side surfaces of the first electrode 210 and an opposite side surface of the side surface wrapped by the first separator sheet 250 among both side surfaces of the second electrode 220 may have a structure in which they are located so as to be adjacent to each other. Thus, a Z-folding type electrode assembly can be formed.

Further, the opposite side surface of the side surface wrapped by the first separator sheet 250 among both side surfaces of the second electrode 220 may make contact with the first separator sheet 250, and the side surface wrapped by the separator sheet among both side surfaces of the first electrode 210 may make contact with the first separator sheet 250. Here, "the first separator sheet makes contact with the first electrode 210 or the second electrode 220" may mean that the first separator sheet 250 extends along the side surface of the first electrode 210 or the second electrode 220, or the first separator sheet 250 wraps around the side surface of the first electrode 210 or the second electrode 220.

Thereby, according to the present embodiment, it is possible to more effectively prevent the first electrode 210 and the second electrode 220 from being distorted within the first separator sheet 250.

Further, an opposite side surface of the side surface wrapped by the separator sheet 250 among both side surfaces of the first electrode 210 may protrude further than the second electrode 220 from the side surface wrapped by the separator sheet 250 among both side surfaces of the second electrode 220. At the same time, the side surface wrapped by the separator sheet 250 among both side surfaces of the first electrode 210 may protrude further than the second electrode 220 from the opposite side surface of the side surface wrapped by the separator sheet 250 among both side surfaces of the second electrode 220. In other words, the first electrode 210 is formed such that at least one side surface protrudes further than the second electrode 220, and specifically, the whole of both side surfaces may protrude. Therefore, this may mean that based on the whole of both side surfaces, the second electrode 220 is located on the inside than the first electrode 210.

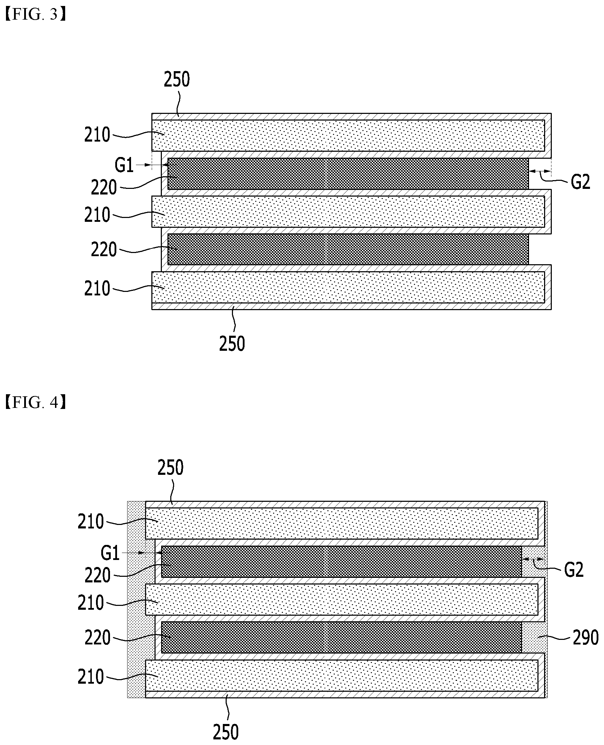

Next, an electrode assembly according to one embodiment of the present disclosure will be described in more detail with reference to FIGS. 3 to 6.

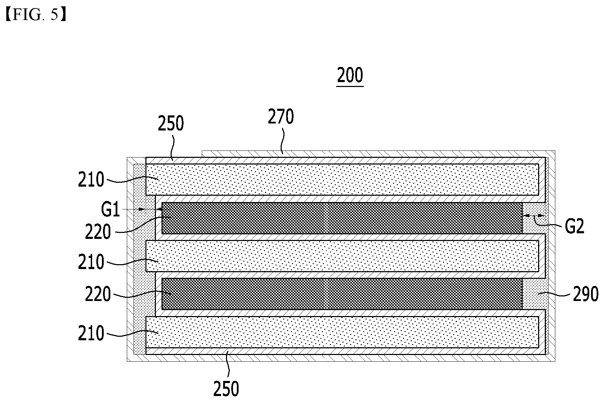

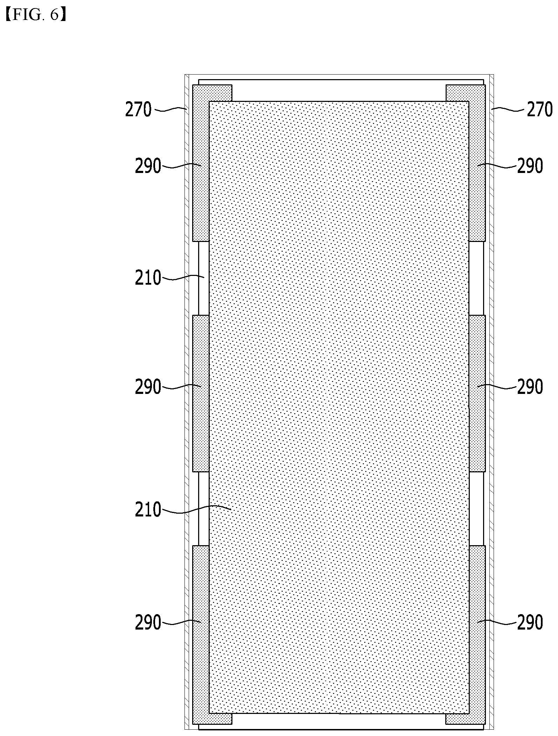

FIG. 3 is a diagram showing only some of the components of the electrode assembly of FIG. 2. FIG. 4 is a diagram showing a state in which a molding member is formed in the electrode assembly of FIG. 3. FIG. 5 is a diagram showing a state in which the outer side surface of the electrode assembly of FIG. 4 is formed. FIG. 6 is a diagram showing a plane cut along the cutting line B-B' of FIG. 1 as viewed from above.

In a conventional electrode assembly, when electrodes and separator sheets are alternately stacked, there is a high possibility of occurrence of overhang in which the positive electrode protrudes further outward than the negative electrode while the positive electrode deviates from the negative electrode due to the electrode area not wrapped by the separator sheet to disturb alignment. If an overhang phenomenon occurs, not only the performance of the electrode assembly deteriorates, but also the possibility of defects due to the occurrence of short circuits increases, which makes it difficult to secure the stability of the electrode assembly.

Thus, referring to FIG. 2, the molding member 290 is located between the first separator sheet 250 wrapping the second electrode 220 and the outer side surface of the electrode assembly 200 and between the second electrode 220 and the outer side surface of the electrode assembly 200. Further, the molding member 290 is located between the first separator sheet 250 wrapping the first electrode 210 and the outer side surface of the electrode assembly 200 and between the first electrode 210 and the outer side surface of the electrode assembly 200. More specifically, the molded member 290 may be formed between the first separator sheet 250 making contact with the upper surface of the second electrode 220 and the first separator sheet 250 making contact with the lower surface of the second electrode 220. Further, the molding member 290 may be formed between the upper surface of the first electrode 210 not making contact with the first separator sheet 250 and the lower surface of the first electrode 210 not making contact with the first separator sheet 250.

Thus, in the present embodiment, the molding member 290 is located between the first separator sheet 250 wrapping the second electrode 220 and the outer side surface of the electrode assembly 200 and between the second electrode 220 and the outer side surface of the electrode assembly 200, thereby capable of preventing an overhang phenomenon in which the second electrode 220 deviates from the first electrode 210 to disturb alignment.

Meanwhile, an opposite side surface of the side surface wrapped by the first separator sheet 250 among both side surfaces of the first electrode 210 makes contact with the molding member 290. More specifically, the molding member 290 may entirely cover the opposite side surface of the side surface wrapped by the first separator sheet 250 among both side surfaces of the first electrode 210.

Further, an opposite side surface of the side surface wrapped by the first separator sheet 250 among both side surfaces of the second electrode 220 makes contact with the molding member 290. More specifically, the molding member 290 may entirely cover the opposite side surface of the side surface wrapped by the first separator sheet 250 among both side surfaces of the second electrode 220.

Thus, the areas of the first electrode 210 and the second electrode 220 that are not wrapped by the first separator sheet 250 are covered and fixed by the molding member 290, thereby capable of restricting the movement of the first electrode 210 and the second electrode 220 and preventing the occurrence of overhang.

Further, referring to FIG. 3, the electrode assembly 200 according to the present embodiment may include a first gap G1, wherein the first gap G1 may be the distance G1 by which the opposite side surface of the side surface wrapped by the first separator sheet 250 among both side surfaces of the first electrode 210 protrudes from the first separator sheet 250 wrapping the second electrode 220.

Further, the electrode assembly 200 according to the present embodiment may include a second gap G2, wherein the second gap G2 may be the distance G2 by which the first separator sheet 250 wrapping the first electrode 210 protrudes from the opposite side surface of the side surface wrapped by the first separator sheet 250 among both side surfaces of the second electrode 220.

At this time, the second gap G2 may be larger than the first gap G1. In other words, the first gap G1 may be smaller than the second gap G1. That is, the space between the upper surface of the first electrode 210 not making contact with the first separator sheet 250 and the lower surface of the first electrode 210 not making contact with the first separator sheet 250 may have a smaller area than the space between the first separator sheet 250 making contact with the upper surface of the second electrode 220 and the first separator sheet 250 making contact with the lower surface of the second electrode 220.

Meanwhile, the molding member 290 may fill the first gap G1 and the second gap G2. At this time, since the second gap G2 is larger than the first gap G1, an area of the molding member 290 filled into the second gap G2 may be larger than an area of the molding member 290 filled into the first gap G1.

Thereby, the side surface of the second electrode 220 not covered by the first separator sheet 250 can be fixed with higher strength. Therefore, the second electrode 220 is prevented from moving by the molding member 290 filled into the second gap G2, and is fixed within the electrode assembly 200, thereby capable of preventing the occurrence of overhang and improving the stability of the electrode assembly 200.

Further, referring to FIG. 4, the molding member 290 may be configured such that an area protruding from one side surface of the electrode assembly 200 where the first gap G1 is formed may be larger than an area protruding from the other side surface of the electrode assembly 200 where the second gap G2 is formed. At this time, one side surface of the electrode assembly 200 on which the first gap G1 is formed may mean an imaginary vertical line that is continuously formed on the opposite side surface of the side surface wrapped by the first separator sheet 250 among both side surfaces of each first electrode 210 formed in the electrode assembly 200. Further, the other side surface of the electrode assembly 200 on which the second gap G2 is formed may mean an imaginary vertical line that is continuously formed on the side surfaces of the first separator sheet 250 that wraps each of the first electrodes 210.

When the first gap G1 and the second gap G2 are filled, a portion of the molding member 290 that remains after filling the first gap G1 and the second gap G2 may exceed both side surfaces of the electrode assembly 200. At this time, the second gap G2 is larger than the first gap G1, and thus, when the molding member 290 of the same area is filled into the first gap G1 and the second gap G2, an area exceeding one side surface of the electrode assembly 200 where the first gap G1 is formed may be larger than an area exceeding the other side surface of the electrode assembly 200 where the second gap G2 is formed.

Thereby, the first electrode 210 that is not wrapped by the first separator sheet 250 is prevented from moving by the molding member 290 that is formed exceeding side surface of the electrode assembly 200 where the first gap G1 is formed, so that an overhang due to movement of the first electrode 210 can be prevented. In particular, the first electrode 210 is formed to have a longer length or a larger area than the second electrode 220, whereby the area of the molding member 290 exceeding one side surface of the electrode assembly 200 where the first gap G1 is formed is formed large, and thus, movement of the first electrode 210 can be effectively suppressed.

Meanwhile, referring to FIG. 5, the electrode assembly 200 according to the present embodiment further includes a second separator sheet 270, wherein the second separator sheet 270 may wrap the entire outer surface of the electrode assembly 200 to form the outer side surface of the electrode assembly 200.

At this time, the second separator sheet 270 may be integrally formed with the first separator sheet 250, so that the second separator sheet 270 may be extended from one end of the first separator sheet 250.

Thereby, in the electrode assembly 200 according to the present embodiment, the second separator sheet 270 can wrap the outer surface of the electrode assembly 200, thereby preventing the first electrode 210 and the second electrode 220 from protruding outward, or preventing occurrence of overhang, and stably fixing the molding member 290.

Meanwhile, referring to FIG. 6, the electrode assembly 200 according to the present embodiment may include a plurality of molding members 290. FIG. 6 is a diagram showing a plane cut along the cutting line B-B' of FIG. 1 as viewed from above, and thus, the molding member 290 may be formed to cover each side surface of the second electrode 220 so that the second electrode 220 can be fixed.

Thereby, it is possible to prevent an overhang phenomenon in which the second electrode 220 deviates from the first electrode 210 to disturb alignment, and the position of the second electrode 220 can be fixed by the molding member 290 to improve the stability of the electrode assembly 200.

Further, at this time, the electrode assembly 200 according to the present embodiment includes the molding member 290, thereby capable of preventing an overhang phenomenon in which the second electrode 220 deviates from the first electrode 210 to disturb alignment. Thus, the molding member 290 can be formed such that a moldable material is arranged on the electrode assembly 200. In particular, since the molding member 290 is formed of a moldable material, it may be deformed in accordance with the shape of the electrode assembly 200 and formed to be in close contact with the first electrode 210 and the second electrode 220, thereby capable of preventing the movement of the first electrode 210 and the second electrode 220 and maximizing the effect of preventing an overhang.

Here, the moldable material forming the molding member 290 according to the present embodiment may be a material that can be molded at 120 degrees Celsius or less. Thereby, it is possible to prevent the shrinkage of the first separator sheet 250 and the second separator sheet 270 included in the electrode assembly 200 in a process of forming the moldable member 290 with the moldable material.

Moreover, the moldable material forming the molding member 290 according to the present embodiment may be a material that can be molded at 50 degrees Celsius or higher. Thereby, after the process of forming the molding member 290, the molding member 290 may not be deformed within the temperature range in which the electrode assembly 200 is used.

Unlike the same, when the moldable material is a material that can be molded at more than 120 degrees Celsius, there is a problem that shrinkage of the first separator sheet 250 and the second separator sheet 270 occurs in a process of forming the molding member 290. Further, when the moldable material is a material that can be molded at less than 50 degrees Celsius, the molding member 290 is deformed within the temperature range in which the electrode assembly 200 is used, which causes a problem that the molding member 290 does not make close contact with the first electrode 210 and the second electrode 220.

Further, the moldable material forming the molding member 290 according to the present embodiment may be a material that can be molded at a pressure level that can be deformed in accordance with the shape of the electrode assembly 200. Thereby, the moldable material can be easily deformed in accordance with the shape of the electrode assembly 200, so that the molding member 290 can be easily formed.

As an example, the moldable material forming the molding member 290 according to the present embodiment may be a polymeric material, and specifically, it can be formed of one or more materials selected from the group consisting of olefins, acrylates, urethanes, esters, amides, vinyl acetates and rubbers. However, the material is not limited thereto, and is deformed in accordance with the shape of the electrode assembly 200, and is formed to make close contact with the first electrode 210 and the second electrode 220, and any material capable of preventing an overhang can be included in the present embodiment.

Thereby, the electrode assembly 200 according to the present embodiment restricts the movement of the first electrode 210 and the second electrode 220 by the molding member 290, thereby capable of preventing an overhang phenomenon in which the second electrode 220 deviates from the first electrode 210 to disturb alignment, and improving the stability of the electrode assembly. In particular, the molding member 290 is deformed so as to match with the shape of the electrode assembly 200, and is inserted into the electrode assembly 200 so at to form in tight contact with the first electrode 210 and the second electrode 220, so that the positions of the first electrode 210 and the second electrode 220 can be stably fixed.

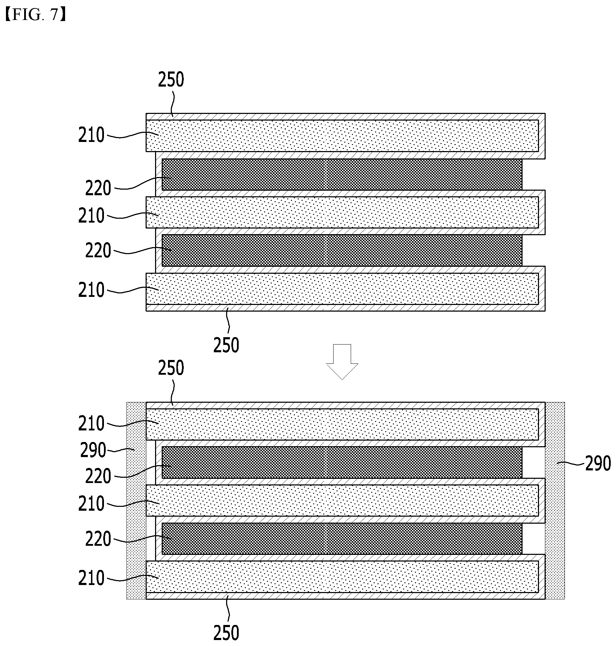

Next, a method of manufacturing an electrode assembly according to another embodiment of the present disclosure will be described with reference to FIGS. 7 to 9. At this time, all the contents of the electrode assembly described above are included in the present embodiment, and thus, only different contents will be described.

FIGS. 7 to 9 are diagrams showing a manufacturing method of an electrode assembly according to another embodiment of the present disclosure.

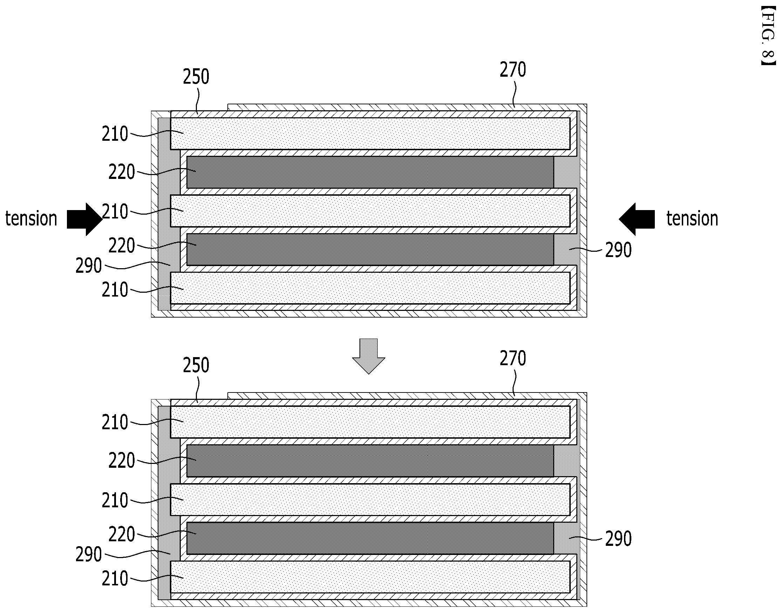

Referring to FIGS. 7 and 8, the manufacturing method of the electrode assembly according to the present embodiment comprises the steps of: alternately stacking a first electrode 210, a second electrode 220, and a first separator sheet 250 to manufacture an electrode assembly 200; arranging a moldable material on the electrode assembly 200; and wrapping the outer surface of the electrode assembly 200 with the second separator sheet 270.

At this time, the arranging a moldable material on the electrode assembly 200 comprises arranging a moldable material between the first separator sheet 250 wrapping the second electrode 220 and the outer side surface of the electrode assembly 200 and between the second electrode 220 and the outer side surface of the electrode assembly 200.

Further, the arranging a moldable material on the electrode assembly 200 comprises arranging a moldable material between the first separator sheet 250 wrapping the first electrode 210 and the outer side surface of the electrode assembly 200 and between the first electrode 210 and the outer side surface of the electrode assembly 200.

In particular, referring to FIG. 8, the manufacturing method of the electrode assembly according to the present embodiment may comprise inserting the moldable material into the electrode assembly 200 by the tension generated by the second separator sheet 270 to form the molded member 290, in the wrapping the outer surface of the electrode assembly 200 with the second separator sheet 270.

While the second separator sheet 270 wraps the outer surface of the electrode assembly 200, the outer surface of the electrode assembly 200 may be formed. The moldable material is deformed in accordance with the shape of the electrode assembly 200 by the tension of the second separator sheet 270, and thus can be formed to make close contact with the first electrode 210 and the second electrode 220.

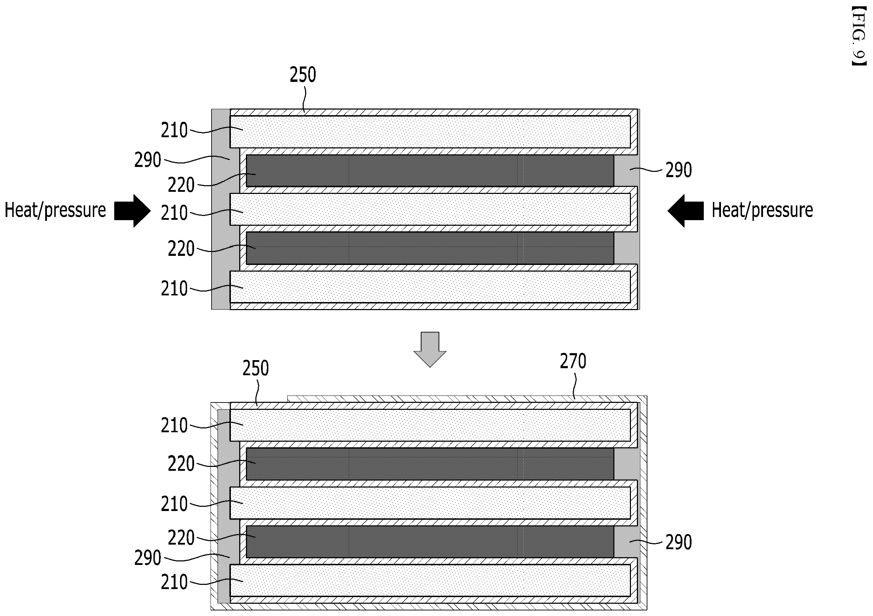

Further, referring to FIGS. 7 and 9, the manufacturing method of the electrode assembly according to yet another embodiment of the present disclosure may further comprise heating and pressing the electrode assembly 200, after the arranging a moldable material on the electrode assembly 200. In other words, the manufacturing method of the electrode assembly according to the present embodiment may further comprise heating and pressing the electrode assembly 200 before the wrapping the outer surface of the electrode assembly 200 with the second separator sheet 270. Through the heating and pressing the electrode assembly 200, the moldable material may be inserted into the electrode assembly 200 to form the molding member 290.

In particular, after arranging the moldable material on the electrode assembly 200, each side surface of the electrode assembly 200 on which the moldable material is arranged is heated, so that the ability to deform the moldable material according to the shape of the electrode assembly 200 can be maximized.

Moreover, by pressing each side surface of the electrode assembly 200 on which the moldable material is arranged, the moldable material is inserted into the electrode assembly 200, so that areas making contact with the first electrode 210 and the second electrode 220 can be maximized.

Therefore, the heating and pressing the electrode assembly 200 may include both heating followed by pressing and pressing followed by heating, and proceeding heating and pressing at the same time is also included in the present embodiment.

Further, the manufacturing method of the electrode assembly according to the present embodiment can stably form the molding member 290 on the electrode assembly 200 through the heating and pressing as well as tension by the second separator sheet 270, so that the effect of fixing the first electrode 210 and the second electrode 220 by the molding member 290 can be further enhanced.

Meanwhile, the electrode assembly 200 formed by the manufacturing method of the electrode assembly according to the present embodiment may include all the configurations of the electrode assembly 200 described above.

That is, the electrode assembly 200 according to the present embodiment may include a first gap G1, wherein the first gap G1 may be the distance G1 by which the opposite side surface of the side surface wrapped by the first separator sheet 250 among both side surfaces of the first electrode 210 protrudes from the first separator sheet 250 wrapping the second electrode 220.

Also, the electrode assembly 200 according to the present embodiment may include a second gap G2, wherein the second gap G2 may be the distance G2 by which the first separator sheet 250 wrapping the first electrode 210 protrudes from the opposite side surface of the side surface wrapped by the first separator sheet 250 among both side surfaces of the second separator sheet 220.

At this time, the second gap G2 may be larger than the first gap G1. In other words, the first gap G1 may be smaller than the second gap G1. That is, the space between the upper surface of the first electrode 210 not making contact with the first separator sheet 250 and the lower surface of the first electrode 210 not making contact with the first separator sheet 250 may have a smaller area than the space between the first separator sheet 250 making contact with the upper surface of the second electrode 220 and the first separator sheet 250 making contact with the lower surface of the second electrode 220.

Meanwhile, the molding member 290 formed by the manufacturing method of the electrode assembly according to the present embodiment may **fill** the first gap G1 and the second gap G2. At this time, since the second gap G2 is larger than the first gap G1, an area of the molding member 290 filled into the second gap G2 may be larger than an area of the molding member 290 filled into the first gap G1.

Thereby, the side surface of the second electrode 220 not wrapped by the first separator sheet 250 can be fixed with higher strength. Therefore, the second electrode 220 is prevented from moving by the molding member 290 filled into the second gap G2, and is fixed within the electrode assembly 200, thereby preventing the occurrence of overhang, and improving the stability of the electrode assembly 200.

Thereby, the manufacturing method of the electrode assembly according to the present embodiment is a manufacturing method of the electrode assembly that can form a molding member 290 on the electrode assembly 200, restrict the movement of the first electrode 210 and the second electrode 220 by the molding member 290, prevent an overhang phenomenon in which the second electrode 220 deviates from the first electrode 210 to disturb alignment, and improve the stability of the electrode assembly formed by the manufacturing method of the electrode assembly according to the present embodiment. In particular, the molding member 290 is deformed so as to match with the shape of the electrode assembly 200, and is inserted into the electrode assembly 200 so at to form in tight contact with the first electrode 210 and the second electrode 220, so that the positions of the first electrode 210 and the second electrode 220 can be stably fixed.

According to yet another embodiment of the present disclosure, there is provided a battery cell comprising the above-mentioned electrode assembly. The battery cell may include a battery case (not shown) that houses the above-mentioned electrode assembly 200 together with an electrolyte solution. At this time, the electrode assembly 200 may be made into the final electrode assembly 100 described above and housed in a battery case (not shown).

Here, the battery case (not shown) may be a laminate sheet including a resin layer and a metal layer. More specifically, the battery case (not shown) is made from a laminate sheet, and may be composed of an outer side resin layer that forms the outermost shell, a shielding metal layer that prevents penetration of materials, and an inner resin layer for sealing.

Although the invention has been described in detail with reference to preferred embodiments thereof, the scope of the present disclosure is not limited thereto, and various modifications and improvements can be made by those skilled in the art using the basic concepts of the present disclosure as defined in the appended claims.

### [Description of Reference Numerals]

100: final electrode assembly
200: electrode assembly
210: first electrode
220: second electrode
250: first separator sheet
270: second separator sheet
290: molding member
300: fixing tape
400: electrode lead
500: lead film

## Claims

1. An electrode assembly (200) in which electrodes and first separator sheets (250) are alternately stacked, wherein:
the electrode comprises a first electrode (210) and a second electrode (220),
the first separator sheet (250) has a zigzag shape formed by being folded at least twice,
a length of the second electrode (220) is shorter than a length of the first electrode (210), and
the electrode assembly (200) comprises a molding member (290) located between the first separator sheet (250) wrapping the second electrode (220) and the outer side surface of the electrode assembly (200) and between the second electrode (220) and an outer side surface of the electrode assembly (200), wherein:
the molding member (290) is located between the first separator sheet (250) wrapping the first electrode (210) and the outer side surface of the electrode assembly (200) and between the first electrode (210) and the outer side surface of the electrode assembly (200),
**characterized in that**
an opposite side surface of the side surface wrapped by the first separator sheet (250) among both side surfaces of the first electrode (210) makes contact with the molding member (290), and
an opposite side surface of a side surface wrapped by the first separator sheet (250) both side surfaces of the second electrode (220) makes contact with the molding member (290).

2. The electrode assembly (200) of claim 1, wherein:
the molding member (290) entirely covers an opposite side surface of a side surface wrapped by the first separator sheet (250) among both side surfaces of the first electrode (210).

3. The electrode assembly (200) of claim 1, wherein:
an opposite side surface of the side surface wrapped by the first separator sheet (250) among both side surfaces of the first electrode (210) makes contact with the first separator sheet (250), and
an opposite side surface of a side surface wrapped by the first separator sheet (250) both side surfaces of the second electrode (220) makes contact with the first separator sheet (250).

4. The electrode assembly (200) of claim 1, wherein:
the electrode assembly (200) comprises a first gap (G1) and a second gap (G2), and
the second gap (G2) is larger than the first gap (G1).

5. The electrode assembly (200) of claim 4, wherein:
the molding member (290) fills the first gap (G1) and the second gap (G1).

6. The electrode assembly (200) of claim 5, wherein:
the molding member (290) is configured such that an area protruding from one side surface of the electrode assembly (200) where the first gap (G1) is formed is larger than an area protruding from the other side surface of the electrode assembly (200) where the second gap (G2) is formed.

7. The electrode assembly (200) of claim 1,
further comprising a second separator sheet (270),
wherein the second separator sheet (270) wraps the entire outer surface of the electrode assembly (200) and forms the outer side surface of the electrode assembly (200).

8. A manufacturing method of an electrode assembly (200), the method comprising the steps of:
alternately stacking a first electrode (210), a second electrode (220) and a first separator sheet (250) to manufacture an electrode assembly (200);
arranging a moldable material on the electrode assembly (200); and
wrapping the outer surface of the electrode assembly (200) with a second separator sheet (270),
wherein the first separator sheet (250) has a zigzag shape formed by being folded at least twice, and
wherein the arranging a moldable material on the electrode assembly (200) comprises arranging a moldable material between the first separator sheet (250) wrapping the second electrode (220) and the outer side surface of the electrode assembly (200) and between the second electrode (220) and the outer side surface of the electrode assembly (200), wherein:
the arranging a moldable material on the electrode assembly (200) comprises arranging a moldable material between the first separator sheet (250) wrapping the first electrode (210) and the outer side surface of the electrode assembly (200) and between the first electrode (210) and the outer side surface of the electrode assembly (200),
**characterized in that**
an opposite side surface of the side surface wrapped by the first separator sheet (250) among both side surfaces of the first electrode (210) makes contact with the molding member (290), and
an opposite side surface of a side surface wrapped by the first separator sheet (250) both side surfaces of the second electrode (220) makes contact with the molding member (290).

9. The manufacturing method of claim 8,
further comprising heating and pressing the electrode assembly (200), after the arranging a moldable material on the electrode assembly (200).

10. The manufacturing method of claim 8, wherein:
the electrode assembly (200) comprises a first gap (G1) and a second gap (G2), and
the second gap (G2) is larger than the first gap (G1).

11. The manufacturing method of claim 10, wherein:
the molding member (290) fills the first gap (G1) and the second gap (G2).

## Patentansprüche

1. Elektrodenbaugruppe (200), bei der Elektroden und erste Separatorfolien (250) abwechselnd gestapelt sind, wobei:
die Elektrode sowohl eine erste Elektrode (210) wie auch eine zweite Elektrode (220) bezeichnet,
die erste Separatorfolie (250) eine durch mindestens zweimaliges Falten gebildete Zickzackform aufweist,
die Länge der zweiten Elektrode (220) kürzer ist als die Länge der ersten Elektrode (210),
und
die Elektrodenbaugruppe (200) ein Formteil (290) umfasst, das sich zwischen der die zweite Elektrode (220) umhüllenden ersten Separatorfolie (250) und der äußeren Seitenfläche der Elektrodenbaugruppe (200) sowie zwischen der zweiten Elektrode (220) und äußeren Seitenfläche der Elektrodenbaugruppe (200) befindet, wobei:
sich das Formteil (290) zwischen der ersten Separatorfolie (250), die die erste Elektrode (210) umhüllt, und der äußeren Seitenfläche der Elektrodenbaugruppe (200) sowie zwischen der ersten Elektrode (210) und der äußeren Seitenfläche der Elektrodenbaugruppe (200) befindet, **dadurch gekennzeichnet, dass**
eine der von der ersten Separatorfolie (250) umhüllten Seitenfläche gegenüberliegende Seitenfläche von den beiden Seitenflächen der ersten Elektrode (210) Kontakt mit dem Formteil (290) aufnimmt, und
eine von der ersten Separatorfolie (250) umhüllten Seitenfläche gegenüberliegende Seitenfläche von den beiden Seitenflächen der zweiten Elektrode (220) in Kontakt mit dem Formteil (290) steht.

2. Elektrodenbaugruppe (200) nach Anspruch 1, wobei:
das Formteil (290) eine Seitenfläche von den beiden Seitenflächen der ersten Elektrode (210) gegenüber der von der ersten Separatorfolie (250) umhüllten Seitenfläche, vollständig bedeckt.

3. Elektrodenbaugruppe (200) nach Anspruch 1, wobei:
eine Seitenfläche gegenüber der von der ersten Separatorfolie (250) umhüllten Seitenfläche von den beiden Seitenflächen der ersten Elektrode (210) mit der ersten Separatorfolie (250) in Kontakt steht, und
eine Seitenfläche gegenüber einer von der ersten Separatorfolie (250) umhüllten Seitenfläche der beiden Seitenflächen der zweiten Elektrode (220) mit der ersten Separatorfolie (250) in Kontakt steht.

4. Elektrodenbaugruppe (200) nach Anspruch 1, wobei:
die Elektrodenbaugruppe (200) einen ersten Spalt (G1) und einen zweiten Spalt (G2) umfasst, und
der zweite Spalt (G2) größer ist als der erste Spalt (G1).

5. Elektrodenbaugruppe (200) nach Anspruch 4, wobei:
das Formteil (290) den ersten Spalt (G1) und den zweiten Spalt (G2) ausfüllt.

6. Elektrodenbaugruppe (200) nach Anspruch 5, wobei:
das Formteil (290) so ausgebildet ist, dass ein Bereich, der von einer Seitenfläche der Elektrodenbaugruppe (200) vorsteht, an der der erste Spalt (G1) ausgebildet ist, größer ist als ein Bereich, der von der anderen Seitenfläche der Elektrodenbaugruppe (200) vorsteht, an der der zweite Spalt (G2) ausgebildet ist.

7. Elektrodenbaugruppe (200) nach Anspruch 1,
die ferner eine zweite Separatorfolie (270) umfasst,
wobei die zweite Separatorfolie (270) die gesamte Außenfläche der Elektrodenbaugruppe (200) umhüllt und die äußere Seitenfläche der Elektrodenbaugruppe (200) bildet.

8. Verfahren zur Herstellung einer Elektrodenbaugruppe (200), wobei das Verfahren die folgenden Schritte umfasst:
abwechselndes Schichten einer ersten Elektrode (210), einer zweiten Elektrode (220) und einer ersten Separatorfolie (250) zur Herstellung einer Elektrodenbaugruppe (200);
Anordnen eines formbaren Materials auf der Elektrodenbaugruppe (200); und
Umwickeln der Außenfläche der Elektrodenbaugruppe (200) mit einer zweiten Separatorfolie (270),
wobei die erste Separatorfolie (250) eine Zickzackform aufweist, die durch mindestens zweimaliges Falten gebildet wird, und
wobei das Anordnen eines formbaren Materials auf der Elektrodenbaugruppe (200) das Anordnen eines formbaren Materials zwischen der ersten Separatorfolie (250), die die zweite Elektrode (220) umhüllt, und der äußeren Seitenfläche der Elektrodenbaugruppe (200) sowie zwischen der zweiten Elektrode (220) und der äußeren Seitenfläche der Elektrodenbaugruppe (200) umfasst, wobei:
das Anordnen eines formbaren Materials auf der Elektrodenbaugruppe (200) umfasst das Anordnen eines formbaren Materials zwischen der ersten Separatorfolie (250), die die erste Elektrode (210) umhüllt, und der äußeren Seitenfläche der Elektrodenbaugruppe (200) sowie zwischen der ersten Elektrode (210) und der äußeren Seitenfläche der Elektrodenbaugruppe (200),
**dadurch gekennzeichnet, dass**
eine gegenüberliegende Seitenfläche zur von der ersten Separatorfolie (250) umhüllten Seitenfläche der beiden Seitenflächen der ersten Elektrode (210) Kontakt mit dem Formteil (290) aufnimmt, und
eine gegenüberliegende Seitenfläche zur von der ersten Separatorfolie (250) umhüllten Seitenfläche der beiden Seitenflächen der zweiten Elektrode (220) mit dem Formteil (290) in Kontakt steht.

9. Herstellungsverfahren nach Anspruch 8,
das ferner das Erhitzen und Pressen der Elektrodenbaugruppe (200) umfasst, nachdem ein formbares Material auf der Elektrodenbaugruppe (200) angeordnet wurde.

10. Herstellungsverfahren nach Anspruch 8, wobei:
die Elektrodenbaugruppe (200) einen ersten Spalt (G1) und einen zweiten Spalt (G2) umfasst, und
der zweite Spalt (G2) größer ist als der erste Spalt (G1).

11. Herstellungsverfahren nach Anspruch 10, wobei:
das Formteil (290) den ersten Spalt (G1) und den zweiten Spalt (G2) ausfüllt.

## Revendications

1. Ensemble d'électrodes (200) dans lequel des électrodes et des premières feuilles séparatrices (250) sont empilées en alternance,
l'électrode comprenant une première électrode (210) et une deuxième électrode (220),
la première feuille séparatrice (250) ayant une forme en zigzag réalisée en ayant été pliée au moins deux fois,
une longueur de la deuxième électrode (220) étant plus courte qu'une longueur de la première électrode (210),
et
l'ensemble d'électrodes (200) comprenant un élément moulant (290) situé entre la première feuille séparatrice (250) enveloppant la deuxième électrode (220) et la surface latérale extérieure de l'ensemble d'électrodes (200), et entre la deuxième électrode (220) et une surface latérale extérieure de l'ensemble d'électrodes (200),
l'élément moulant (290) étant situé entre la première feuille séparatrice (250) enveloppant la première électrode (210) et la surface latérale extérieure de l'ensemble d'électrodes (200), et entre la première électrode (210) et la surface latérale extérieure de l'ensemble d'électrodes (200),
**caractérisé en ce que**
une surface latérale opposée de la surface latérale enveloppée par la première feuille séparatrice (250) parmi les deux surfaces latérales de la première électrode (210) venant en contact avec l'élément moulant (290), et
une surface latérale opposée d'une surface latérale enveloppée par la première feuille séparatrice (250) parmi les deux surfaces latérales de la deuxième électrode (220) venant en contact avec l'élément moulant (290).

2. Ensemble d'électrodes (200) selon la revendication 1,
l'élément moulant (290) couvrant entièrement une surface latérale opposée d'une surface latérale enveloppée par la première feuille séparatrice (250) parmi les deux surfaces latérales de la première électrode (210).

3. Ensemble d'électrodes (200) selon la revendication 1,
une surface latérale opposée de la surface latérale enveloppée par la première feuille séparatrice (250) parmi les deux surfaces latérales de la première électrode (210) venant en contact avec la première feuille séparatrice (250), et
une surface latérale opposée d'une surface latérale enveloppée par la première feuille séparatrice (250) parmi les deux surfaces latérales de la deuxième électrode (220) venant en contact avec la première feuille séparatrice (250).

4. Ensemble d'électrodes (200) selon la revendication 1,
l'ensemble d'électrodes (200) comprenant un premier écart (G1) et un deuxième écart (G2), et
le deuxième écart (G2) étant plus grand que le premier écart (G1).

5. Ensemble d'électrodes (200) selon la revendication 4,
l'élément moulant (290) comblant le premier écart (G1) et le deuxième écart (G1).

6. Ensemble d'électrodes (200) selon la revendication 5,
l'élément moulant (290) étant configuré de sorte qu'une zone dépassant d'une surface latérale de l'ensemble d'électrodes (200) où se forme le premier écart (G1) soit plus grande qu'une zone dépassant de l'autre surface latérale de l'ensemble d'électrodes (200) où se forme le deuxième écart (G2).

7. Ensemble d'électrodes (200) selon la revendication 1,
comprenant en outre une deuxième feuille séparatrice (270),
la deuxième feuille séparatrice (270) enveloppant l'intégralité de la surface extérieure de l'ensemble d'électrodes (200) et formant la surface latérale extérieure de l'ensemble d'électrodes (200).

8. Procédé de fabrication d'un ensemble d'électrodes (200), le procédé comprenant les étapes suivantes :
empilement en alternance d'une première électrode (210), d'une deuxième électrode (220), et d'une première feuille séparatrice (250) pour fabriquer un ensemble d'électrodes (200) ;
agencement d'un matériau moulable sur l'ensemble d'électrodes (200) ; et
enveloppement de la surface extérieure de l'ensemble d'électrodes (200) avec une deuxième feuille séparatrice (270),
la première feuille séparatrice (250) ayant une forme en zigzag formée en ayant été pliée au moins deux fois, et
l'agencement d'un matériau moulable sur l'ensemble d'électrodes (200) comprenant l'agencement d'un matériau moulable entre la première feuille séparatrice (250) enveloppant la deuxième électrode (220) et la surface latérale extérieure de l'ensemble d'électrodes (200), et entre la deuxième électrode (220) et la surface latérale extérieure de l'ensemble d'électrodes (200),
l'agencement d'un matériau moulable sur l'ensemble d'électrodes (200) comprenant l'agencement d'un matériau moulable entre la première feuille séparatrice (250) enveloppant la première électrode (210) et la surface latérale extérieure de l'ensemble d'électrodes (200), et entre la première électrode (210) et la surface latérale extérieure de l'ensemble d'électrodes (200),
**caractérisé en ce que**
une surface latérale opposée de la surface latérale enveloppée par la première feuille séparatrice (250) parmi les deux surfaces latérales de la première électrode (210) venant en contact avec l'élément moulant (290), et
une surface latérale opposée d'une surface latérale enveloppée par la première feuille séparatrice (250) parmi les deux surfaces latérales de la deuxième électrode (220) venant en contact avec l'élément moulant (290).

9. Procédé de fabrication selon la revendication 8,
comprenant en outre le chauffage et le pressage de l'ensemble d'électrodes (200), après l'agencement d'un matériau moulable sur l'ensemble d'électrodes (200).

10. Procédé de fabrication selon la revendication 8,
l'ensemble d'électrodes (200) comprenant un premier écart (G1) et un deuxième écart (G2), et
le deuxième écart (G2) étant plus grand que le premier écart (G1).

11. Procédé de fabrication selon la revendication 10,
l'élément moulant (290) comblant le premier écart (G1) et le deuxième écart (G2).
